# EUROPEAN PATENT SPECIFICATION

(11) **EP 1 745 384 B1**
(45) Date of publication and mention of the grant of the patent: **16.12.2009**
(21) Application number: 05731772.9
(22) Date of filing: 26.04.2005
(51) Int. Cl.: G06F 13/40

(54) **CIRCUIT WITH ASYNCHRONOUS/SYNCHRONOUS INTERFACE**
SCHALTUNG MIT ASYNCHRONER/SYNCHRONER SCHNITTSTELLE
CIRCUIT COMPRENANT UNE INTERFACE ASYNCHRONE/SYNCHRONE

(30) Priority: 28.04.2004 EP 04101794
(43) Date of publication of application: 24.01.2007
(73) Proprietor: Koninklijke Philips Electronics N.V., 5621 BA Eindhoven (NL)
(72) Inventor: TIMMERMANS, Daniel c/o Philips Intellectual, Cross Oak Lane Redhill Surrey RH1 5HA (GB)
(74) Representative: Damen, Daniel Martijn
(86) International application number: PCT/IB2005/051360
(87) International publication number: WO 2005/106687

(56) References cited:
- EP-A- 0 260 392
- US-A1- 2003 159 078
- YUN K Y ET AL: "PAUSIBLE CLOCKING-BASED HETEROGENEOUS SYSTEMS" December 1999 (1999-12), IEEE TRANSACTIONS ON VERY LARGE SCALE INTEGRATION (VLSI) SYSTEMS, IEEE INC. NEW YORK, US, PAGE(S) 482-488 , XP000869234 ISSN: 1063-8210 abstract

## Description

The invention relates to a circuit with a synchronously operating sub-circuit and an asynchronously operating sub-circuit that communicate with one another. More particularly, the invention relates to an asynchronously operating processor that is interfaced to synchronously operating peripheral circuits.

For communication between pairs of sub-circuits typically either a blocking or non-blocking interface is used. A blocking interface is used when the circuit that produces data has to wait until the data has been accepted before proceeding with further operations. This is used for example when the effect of the further operations depends on prior action taken by the sub-circuit that receives the data. When a non-blocking interface is used, the sub-circuit that produces the data proceeds with further operations once it has delivered the data to a storage element for use by the other sub-circuit, without waiting for the other sub-circuit. This is used for example when the further operations do not depend on prior action by the sub-circuit that receives the data, e.g. during writing to a memory. A non-blocking interface is generally faster than a blocking interface, but a blocking interface is more generally useful, since it can also be used to implement a non-blocking interface by automatically accepting the data.

In bus circuits, wherein a processor is coupled to a plurality of different bus units via a common bus, the processor preferably has the option to use blocking communication or non-blocking communication alternatively, dependent on the bus unit involved. For example, when setting timer or control registers blocking communication may be used, and when writing data to a long-term memory non-blocking communication is preferably used, to speed up processing. Blocking communication may be implemented for example by pausing the processor for a predetermined number of clock cycles after writing data to the bus, the predetermined number of cycles corresponding to a time interval that is known to be needed by the receiving bus unit. Alternatively, the processor may pause until it receives a confirmation signal from the bus unit, confirming acceptance of the data. Also in other circuits than bus circuits alternate blocking or non-blocking communication may be needed.

Synchronous design and asynchronous design are two fundamentally different approaches to circuit design. In synchronously (clocked) operating circuits the timing of actions in different sub-circuits is controlled by periodic clock pulses, which are centrally generated for all sub-circuits, independent of the type of actions performed in a given clock period in a given sub-circuit. In asynchronously operating circuits timing is negotiated between pairs of communicating sub-circuits, individually for successive actions so as to ensure a proper sequence of actions in the sub-circuits. Typically, the sub-circuits exchange handshake transactions for this purpose. In a handshake transaction a first sub-circuit generates a request signal to a second circuit to indicate that an action may proceed, and the second circuit generates an acknowledge signal to indicate that the request has been accepted and that the first circuit may prepare a next request.

Most commercial circuit designs are synchronous, but in recent years asynchronous designs have become more popular for various reasons, such as the ability to reduce power consumption, to increase operating speed and to reduce the complexity involved with clocking large circuits.

Mixed synchronous-asynchronous designs have also become more popular. By combining the two types of design, the most suitable design technique can be used for each peripheral, and/or it makes it possible to use existing synchronous sub-circuit designs without having to redesign all sub-circuits. One example of mixed design uses an asynchronously operating processor core, with one or more synchronously operating peripheral circuits, such as a timer circuit or a memory circuit. In this example it is usually desirable to connect a plurality of synchronously operating peripherals with a bus-like connection.

Mixed synchronous-asynchronous designs my also be useful for communication between different clocked sub-circuits that use different clocks that are not mutually synchronized. In this case, as used herein, one should speak of asynchronously communicating sub-circuits, rather than asynchronously operating sub-circuits, since the main part of the sub-circuits have clocked operation. Nevertheless, the interface between the two-clocked sub-circuits may be an asynchronously operating sub-circuit.

US patent No 6,247,082 illustrates this type of communication, wherein flip-flops are used to capture signals from one clock domain in another clock domain in case of a request from one of the domains. On problem here is the possibility of metastability, which arises if a transition of the signal that has to be captured nearly coincides with a clock edge of the clock signal of the domain into the signal has to be captured. A number of flip-flops, each clocked by this clock signal, may be placed in cascade to reduce this problem. Another solution is to extend of clock periods for selected clock cycles in which capture is necessary, to enable safe capture.

US patent 5,884,100 describes the use of clock gating, and synchronizers, whereby a clock signal from one clock domain or another is passed to a memory dependent on whether a transfer request is made from one clock domain or another.

More generally, i.e. also in the case of coupling of a completely asynchronously operating sub-circuit and a clocked operating sub-circuit in a mixed design, a handshake interface circuit is needed. Implementations of such interface circuits are also known. Basically, this type of handshake interface circuit uses clock pulses of the clock of a synchronously operating sub-circuit to trigger request or acknowledge signals for an asynchronously operating sub-circuit. Conversely, the interface circuit may mark selected clock pulses of the synchronously operating sub-circuit with enable signals, subsequent to reception of a request or acknowledge signal from the asynchronously operating sub-circuit.

Dependent on the needs of the sub-circuits a blocking or a non-blocking interface can be implemented. A blocking interface delays acknowledgment of a request until acceptance of the data is ensured, e.g. by waiting for a number of clock cycles or for a confirmation signal. A non-blocking interface the interface acknowledges the request once the data is stored in a register for later use.

The blocking interface can also be used when non-blocking communication is needed, by automatically generating a confirmation once the data has been stored. However, in the case of an interface for writing data from an asynchronously operating sub-circuit to a synchronously operating sub-circuit such an interface is slower than a real non-blocking interface, since the confirmation always requires a clock cycle. A non-blocking interface would be faster, but there is no known way to switch it to operate as a blocking interface. Using an interface that can be switched between a blocking state and a non-blocking state prior to communication also involves delays.

Another problem occurs if data from the asynchronously operating sub-circuit cannot be applied to the clocked operating sub-circuit in repeated clock cycles without undesirable side effects. To prevent such side effects it is necessary to supply default data to the clocked operating sub-circuit for those clock cycles for which there is no data from the asynchronously operating sub-circuit. This may be realized by automatically replacing data from the asynchronously operating sub-circuit after one clock cycle. However, this may lead to a waste of clock cycles when the asynchronously operating sub-circuit is able to supply data at a high rate.

Among others, it is an object of the invention to provide for a circuit with an interface between an asynchronously operating sub-circuit and a clocked operating sub-circuit, which is able to operate both as a blocking interface and as a non-blocking interface and which is faster than a blocking interface when operating as a non-blocking interface.

Among others, it is an object of the invention to provide for a circuit with an asynchronously operating sub-circuit that is coupled to a bus to which a plurality of clocked operating sub-circuits is connected, wherein the asynchronously operating sub-circuit is able to select whether to interface to the bus using blocking communication or non-blocking communication and which is faster during non-blocking communication than during blocking communication.

Among others, it is an object of the invention to provide for a circuit with an interface between an asynchronously operating sub-circuit and a clocked operating sub-circuit, wherein a waste of clock cycles for supplying default data is minimized.

The invention provides for a circuit as set forth in claim 1. A control signal that is supplied accompanying a handshake request is used to control whether blocking or non-blocking communication will be used. The circuit contains handshake elements that can be chained in different paths to acknowledge the request under selectable conditions. The control signal is used to change the path, thereby changing the conditions under which the request signal is acknowledged.

In an embodiment a first path through the handshake elements is used when the control signal selects non-blocking communication and an additional handshake path part is added to the first path when the control signal selects blocking communication. Preferably, the control signal is stored so that it may be used at different places in the path through the handshake circuit, before and after storing.

The invention is particularly useful when a synchronous bus circuit is interfaced to an asynchronously operating circuit. In this case the invention makes it possible to supply address and data information from the asynchronously operating sub-circuit for use on the bus. By means of the invention the asynchronous sub-circuit can submit to the delaying effect of rules for sharing bus access with synchronous circuits in the case of blocking access and operate almost without delay in case of non-blocking access.

In another embodiment a default substitution circuit is used to supply default data to the synchronous sub-circuit if no new data is available from the asynchronous sub-circuit. The data from the asynchronous sub-circuit or default data is loaded into a storage unit, such as a register, for supply to the synchronous sub-circuit. Loading is under control of handshake signals, handshake signals for loading default data being generated conditionally in response to bus cycles if there is no request pending for loading data from the asynchronous sub-circuit. This is useful for example if it should be avoided that a specific data-item from the synchronous sub-circuit affects the synchronous sub-circuit for more than one cycle. The circuit ensures that the data from the asynchronous sub-circuit is replaced after one cycle. By default harmless default data is used, but the circuit ensures that a needless cycle with default data is avoided if new data from the asynchronously operating sub-circuit is available.
Fig. 1 shows a data processing circuit;
Fig. 2 shows a blocking asynchronous-synchronous interface;
Fig. 3 shows a non-blocking asynchronous-synchronous interface;
Fig. 4 shows an interface with selectable blocking;
Fig. 5 shows a blocker circuit;
Fig. 6 shows a default generating circuit;
Fig. 7 shows an embodiment of active clock handshake circuit.

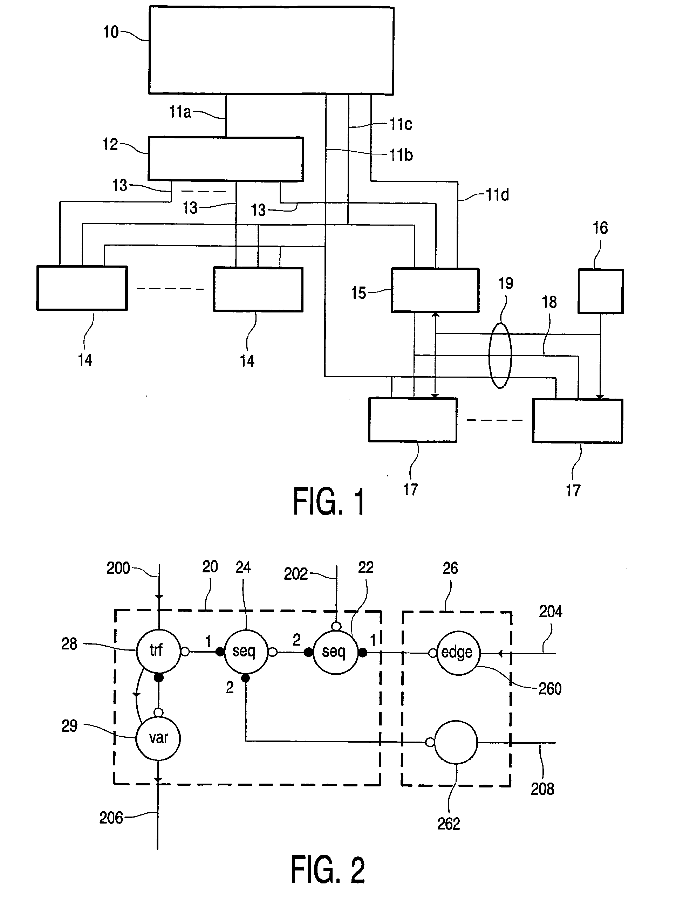

Fig. 1 shows a data processing circuit, containing an asynchronous instruction processor 10, a peripheral handshake circuit 12, asynchronous peripherals 14, an asynchronous-synchronous interface circuit 15, a clock circuit 16 and synchronous peripherals 17. Asynchronous processor 10 has a peripheral handshake connection 11a, a read data input 11b, a write-data/address data/control data output 11c and a blocking/non-blocking selection output 11d. Peripheral handshake circuit 12 couples the peripheral handshake connection 11a of asynchronous processor 10 to respective connections 13 that are coupled to asynchronous peripherals 14 and asynchronous-synchronous interface circuit 15 respectively. Asynchronous peripherals 14 have data outputs coupled in common to data input 11b of asynchronous processor 10 and address/data/control inputs coupled to output 11c of asynchronous processor 10. Although two asynchronous peripherals 14 are shown, it should be understood that any number of peripherals, larger than two or smaller than two may be present. In an embodiment no asynchronous peripherals 14 are used, in which case peripheral handshake circuit 12 may be omitted and peripheral handshake connection 11a may be connected directly to asynchronous-synchronous interface circuit 15.

Synchronous peripherals 17 are coupled in parallel to a synchronous bus 19 that contains a clock line, read data lines and write data/address/control lines. Clock circuit 16 has an output coupled to the clock line of bus 19. The read data lines are coupled to the read data input of asynchronous processor 10. The write data/address/control lines of bus 19 are coupled to asynchronous-synchronous interface circuit 15. Peripherals 14, 17 may include for example timer circuits, memories, IO interfaces special function processing circuits (e.g. signal decoding circuits) etc.

Asynchronous-synchronous interface circuit 15 is coupled between synchronous bus 19, and an asynchronous side that contains a connection from peripheral handshake circuit 12, the write-data/address/control data output of asynchronous processor 10 and blocking/non-blocking selection output 11d.

In operation, asynchronous processor 10 executes a program of instructions. Since processor 10 is asynchronous, no clock is generally involved in its operation. Sub-circuits of processor 10 exchange handshake signals to coordinate their timing. Some of the instruction cause asynchronous processor 10 to access selected peripheral circuits 14, 17. In this case, asynchronous processor 10 generates a handshake request at peripheral handshake connection 11a and supplies an address at output 11c. The address serves to indicate a selected one of the peripherals 14, 17. Asynchronous peripherals 14 receive the address and compare it with their own address. Asynchronous peripherals 14 that detect no match immediately indicate to peripheral handshake circuit 12 that the request from asynchronous processor 10 may be acknowledged. An asynchronous peripheral 14 that detects an address match starts a peripheral action dependent on the control data and/or write data from asynchronous processor 10, optionally writing back read data, and indicates to peripheral handshake circuit 12 when the action has been sufficiently completed to allow asynchronous processor to proceed. When peripheral handshake circuit 12 has received signals from all on all its connections 13 that the request from asynchronous processor 10 may be acknowledged peripheral handshake circuit 12 acknowledges the request.

Peripheral handshake circuit 12 may be implemented in many ways, for example, each connection 13 may be a handshake connection, the peripheral handshake circuit 12 performing a "fork" function, passing the request to all connections 13, receiving back acknowledgements from all connections 13 and generating an acknowledgement back to asynchronous processor 10 when acknowledgements have been received from all peripheral circuits.

Asynchronous-synchronous interface circuit 15 handles requests that are processed by synchronous peripherals 17. Basically, asynchronous-synchronous interface circuit 15 captures write data/address/control data from asynchronous processor 10 and applies the captured information to bus 19 in clock cycles that are generated by clock circuit 18.

According to the invention asynchronous-synchronous interface circuit 15 is arranged to support two types of access: blocking access and non-blocking access. Blocking and non-blocking access differ in that blocking access involves more actions before a request from asynchronous processor 10 is acknowledged. During blocking access asynchronous-synchronous interface circuit 15 waits for a confirmation signal from the selected peripheral 17 before indicating to peripheral handshake circuit 12 that the request from asynchronous processor 10 may be acknowledged. During non-blocking access asynchronous-synchronous interface circuit 15 does not wait for confirmation before indicating that the request may be acknowledged. Once the write data/address/control information has been captured for application to bus 19 during non-blocking access, asynchronous-synchronous interface circuit 15 indicates that the request may be acknowledged.

Typically, the instructions that are executed by asynchronous processor 10 indicate whether blocking access or non-blocking access should be used. This depends on whether, after executing an initial instruction to access a peripheral 17, asynchronous processor 10 should not execute subsequent instructions before the initial instruction has been executed by a peripheral 17. If so asynchronous processor 10 asserts a "blocking signal" on output 11d when it issues the request for the access defined by the initial instruction. If no waiting is needed, asynchronous processor 10 does not assert the "blocking signal" on output 11d. Blocking access may be used for example when a write instruction by one peripheral must have finished before a read instruction is handled by another peripheral, when writing data to start a timer before execution of certain instructions etc. Non-blocking access may be used for example for write operations to a flash memory peripheral that need not be read immediately.

Fig. 2 schematically shows an implementation of a prior art asynchronous-synchronous interface circuit 15, which supports blocking access. The circuit is depicted using standardized symbols for asynchronous circuit components. These symbols are used because they abstract from the way in which request and acknowledge signals are represented.

As is well known, different implementations of handshake connections exist. The invention applies to circuits that use any such implementation, or combinations of such implementations. For example, one family of such implementations uses two signal conductors, a request conductor for sending request signals from a first circuit component to a second circuit component and an acknowledge conductor for sending an acknowledge signal back from the second circuit component to the first circuit component. In a four phase protocol the request signal and the acknowledge signals involve variable length pulses of the potential of the request and acknowledge conductors respectively, the length of the pulses being determined by interaction between the circuits. The falling edge of the pulse of the request signal follows the rising edge of the pulse of the acknowledge signal and the falling edge of the acknowledge signal follows the falling edge of the request signal. In a two-phase protocol, request and acknowledge are signaled by single transitions (up-down or down-up) of the potential on the request and acknowledge lines. Other protocols may invert the meaning of some of the signal levels, or use currents levels instead of voltage levels. Yet other protocols may use a single conductor for both request and acknowledge signals, e.g. by raising and subsequently floating the potential to signal a request and lowering and subsequently floating the potential to signal an acknowledge.

Fig. 2 uses a symbolic notation that is independent of the actual implementation. Symbols like circles or rectangles are used to symbolize circuit components and lines are used to symbolize handshake connections. A black dot on a circle at the start of a line indicates an "active port", i.e. that the circuit component symbolized by the circle generates requests. An open dot indicates a "passive port", i.e. that the circuit component symbolized by the circle generates acknowledgements, whatever the actual implementation of these signals. The implementation of each component depends on the function, which is indicated by a label in the circle and the type of protocol.

For example, one component (labeled by "seq") is a sequencer which, upon reception of a request on its open dot terminal, first performs a first handshake (transmission of request+ reception of acknowledge) on a first black dot terminal (labeled "1") and after completion of that first handshake performs a second handshake on a second black dot terminal (labeled "2"). After completion of that second handshake the sequencer acknowledges the original request on the open dot terminal. In case of a two-phase protocol this component is implemented simply by connecting (a) the request line of the open dot terminal to the request line of the first black dot terminal, (b) the acknowledge line of the first black dot terminal to the request line of the second black dot terminal and (c) the acknowledge line of the second black dot terminal to the acknowledge line of open dot terminal. In a four-phase protocol, a Muller C element may be used to implement this function.

As another example a transfer component (labeled by "trf") upon reception of a request on its open dot terminal, performs a handshake on its black dot terminal and supplies data from an input terminal on the black dot terminal. Upon completion of the handshake on the black dot terminal the request on the open dot terminal is acknowledged. The implementation of this circuit too, often merely involves connection of conductors.

As yet another example a variable storage component (labeled "var") stores data from its open dot terminal upon receiving a request from that open dot terminal. The stored data is output at an output. This circuit typically involves a latch circuit that is controlled by the request signal.

As a further example an "edge" component (labeled "edge") has an open dot terminal and a clock terminal. The edge component receives a request on its open dot terminal and return an acknowledge upon detection of a next subsequent signal edge of a predetermined specified polarity on its edge input terminal (typically upon detection of one type of edge, e.g. a positive edge). This component can be implemented for example using a clocked flip-flop that inputs the request signal and outputs the acknowledge signal and is clocked by edges of the clock signal. But this type of implementation may suffer from metastability problems, which can be countered with more complicated implementations, using for example mutual exclusion elements to detect that the clock signal follows the request.

Fig. 2 shows a blocking asynchronous synchronous interface 20, 26 with a data interface 20 and a clock interface 26. The data interface has a data input 200, which is coupled to the write data/address/control data output of asynchronous processor 10 (not shown) and a handshake terminal 202, typically connected to peripheral handshake circuit 12 (not shown) or directly to asynchronous processor 10. The data interface contains a first and second sequencer 22, 24, a transfer component 28 and a variable storage component 29. Clock interface 26 contains an edge component 260 with a clock input 204 and a confirmation component 262 that has an input 208.

Handshake terminal 202 is coupled to the passive port of first sequencer 22, which has its sequentially first active port coupled to the passive port of edge component 260. The sequentially second active port of first sequencer 22 is coupled to the passive port of second sequencer 24, which in turn has its sequentially first active port coupled to the passive port of transfer component 28. Transfer component 28 has its active port coupled to variable storage component 29. The sequentially second active port of second sequencer 24 is coupled to the passive port of confirmation component 262.

In operation, first sequencer 22 responds to a request from input 202 by generating a request to edge component 260, which acknowledges upon the next clock transition at clock input 204. In response, first sequencer 22 sends a request to second sequencer 24. Second sequencer then first generates a request to transfer component 28, which in response causes variable storage component 29 to store data that originates from data input 202, and subsequently apply the stored data to output 206. When this has been done, transfer component 28 acknowledges the request to the sequentially first active terminal of second sequencer 24. Next second sequencer 24 sends a request at its sequentially second active terminal to confirmation component 262.

Confirmation component acknowledges the request when it receives a confirmation signal at its input 208. The confirmation signal confirms that the handshake may be unblocked, because the circuit (not shown) that receives data output 206 has processed the data. Typically, this confirmation signal is an pulse at an acknowledge output from a synchronous peripheral (not shown), but other types of confirmation may be used, e.g. automatic confirmation may be generated in response to the end of the clock period at clock input 204 that started with the edge that triggered the acknowledge signal by edge component ' 260, or confirmation may be generated with a predetermined delay after that edge, or after the request to confirmation component 262 etc.

In response to the acknowledge signal from confirmation component 262 second sequencer 24 acknowledges the request at its passive port to first sequencer 22, which in turn acknowledges the original request from handshake terminal 202. It should be appreciated that in this way a blocking transaction was executed, in the sense that the final acknowledge signal had to wait for the end of processing of the data, as confirmed by confirmation component 262.

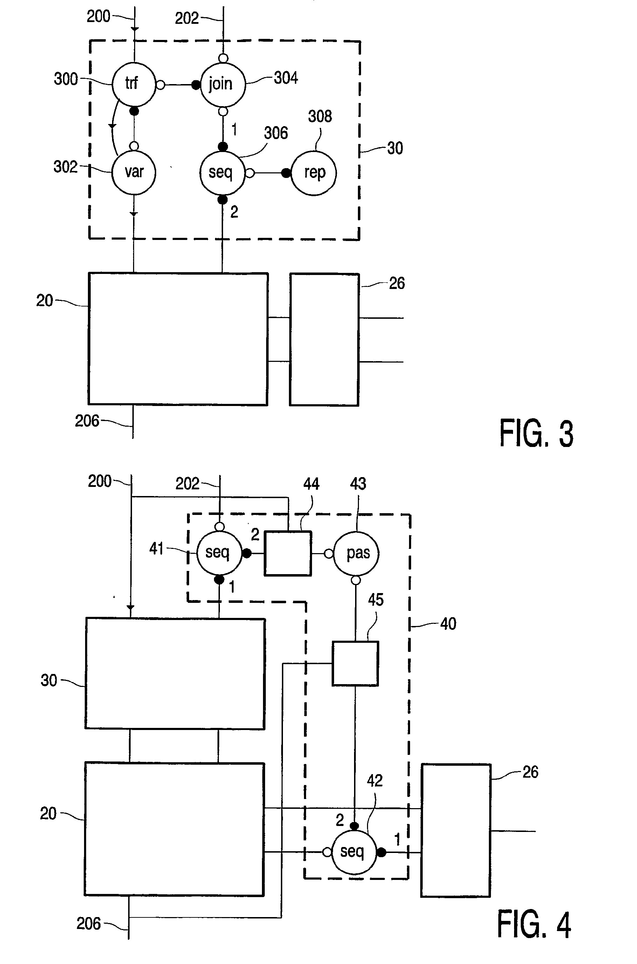

Fig. 3 shows a modified circuit that is capable of handling non-blocking handshakes. This circuit contains a pipeline stage 30 in front of data interface 20 and clock interface 26. Pipeline stage 30 contains a transfer component 300, a variable storage component 302, a join component 304, a sequencer 306 and a repeater component 308. Join component 304 has the function of generating a request at its active port when it has received requests at all its passive ports, and to acknowledge the latter request when it has received an acknowledgement at its active port. Again, many known implementations of this component exist. In an implementation of a four phase protocol for example, an C element is used with inputs coupled to the request lines of the passive terminals and an output coupled to the request line of the active port, the acknowledge line of the active port being coupled to the acknowledge lines of both passive ports. Repeater component 308 has the function of generating requests, initially at its own initiative and later as soon as it receives preceding acknowledgements. Again, many known implementations of this component exist.

In operation the sequencer 306 first passes requests from repeater 308 to join component, which in response generates a request to transfer component 300 as soon as join component 304 receives a request at handshake interface 202. The request to transfer component 300 cause data from input 200 to be stored in variable storage component 302, after which join component 304 acknowledges the requests to the handshake interface 202 and sequencer 306. Sequencer 306 then handshakes with data interface 20, after which repeater 308 generates a next handshake.

It should be appreciated that in this way the circuit is non-blocking, in the sense that requests from handshake interface 202 are acknowledged once the data has been stored in variable storage component 302, but generally before a confirmation is received that the data has been processed. If previous data in variable storage component 302 has not yet been transferred when a request at handshake interface 202 arrives, acknowledgement of the request waits until the previous data has been copied, before the next data is stored. But even then the circuit does not wait for confirmation.

Fig. 4 shows a circuit that provides for blocking or non-blocking operation, dependent on a blocking control signal. For the sake of illustration the blocking control signal is considered to be part of the data on data input 200. In addition to the components of Fig. 3, Fig. 4 contains a blocking control circuit 40. Blocking control circuit 40 contains a first and second sequencer 41, 42, a passivator 43 and selection components 44, 45. First sequencer 41 is inserted between the handshake terminal of pipeline stage 30 and handshake terminal 202, with its passive port coupled to handshake terminal 202 and its sequentially first active port coupled to the join port of pipelined stage 30. Second sequencer 42 is inserted between data interface 20 and clock interface 26, with its passive port coupled to the second sequencer (not shown) of data interface 20 and its sequentially first active port coupled to the confirmation component (not shown) of clock interface 26. The sequentially second active ports of first and second sequencers 41, 42 are coupled to passive ports of passivator 43, through respective selection components 44, 45. Selection components 44, 45 have control inputs coupled to data input 200 and data output 206 respectively, to receive the blocking control signal from the data. Passivator 43 has the function of acknowledging requests at its ports when requests have been received at both ports. It may be implemented for example as a join component, which transmits request at its active port to acknowledgements at its active port.

In operation, when the blocking control signal signals blocking operation selection components 44, 45 pass requests from first and second sequencer 41, 42 to passivator 43. As a result, a request from handshake interface 202 is acknowledged only once a confirmation has been received that the accompanying data has been processed. Pipeline stage 30 operates normally and returns an acknowledgement in non-blocking fashion to first sequencer 41. But before first sequencer 41 can acknowledge at handshake terminal 202, it has to wait until passivator 43 acknowledges. Passivator 43 only does so once data interface 200 has requested confirmation and clock interface 26 has confirmed that the data has been processed. As a result blocking operation is realized.

When the blocking control signal signals non-blocking operation, selection components 44, 45 autonomously acknowledge requests from first and second sequencer 41, 42. Passivator 43 is not involved in this case. As a result; a request from handshake interface 202 is acknowledged once pipeline stage 30 acknowledges. As a result non-blocking operation is realized.

It may be noted that selection components 44, 45 operate under control of the blocking control signal in the data at data input 200 and data output 202 respectively. This makes it possible to complete handling previous non-blocking data while first sequencer 41 is kept waiting for acknowledgment from passivator 43, which can only arise once blocking data is present at data output 206.

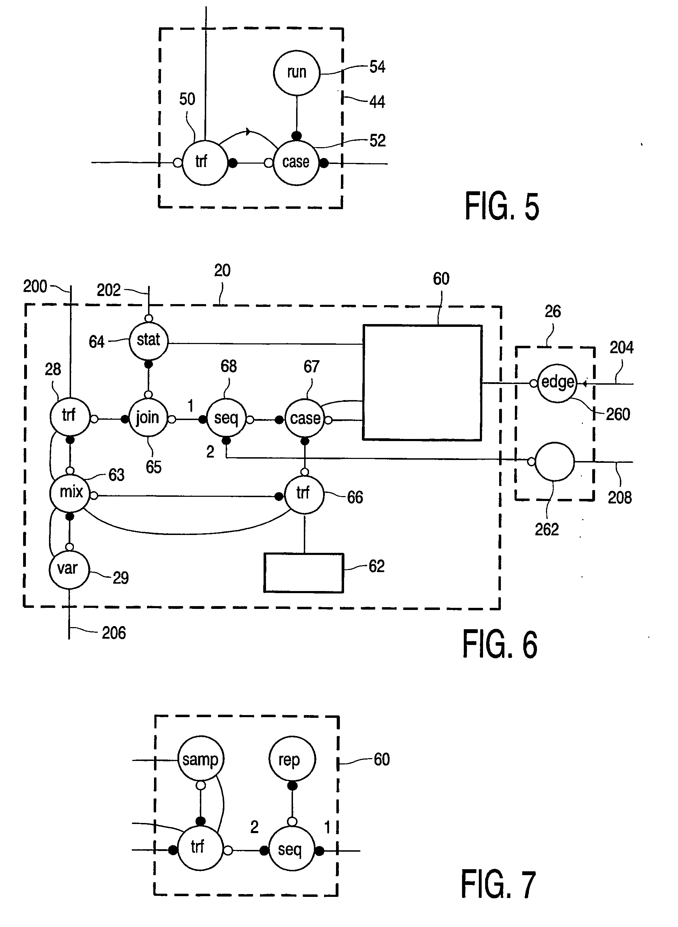

Fig. 5 shows an example of an embodiment of a selection component 44. In this example, the selection component contains a transfer component 50, a "case" component 52 and a "run" component 54. Case component responds to a handshake at its passive port, accompanied by data, by generating a request at a selected one of its active ports, selected dependent on the accompanying data. A subsequent acknowledge signal at the selected one of the active ports results in an acknowledge at the passive port. Run component 54 automatically replies with acknowledgements to incoming requests. Both components are known per se and can be readily implemented in many ways.

In operation, case component 52 passes requests from transfer component 50 to run component 54 or to the passivator (not shown) dependent on the blocking control signal. When the request is passed to run component 54 it is immediately acknowledged in selection component 44. When the request is passed to the passivator the acknowledgement has to wait for acknowledgement from the passivator.

It should be appreciated that the circuits described in the Fig.s merely serve as examples. Many alternatives are possible. For example, a plurality of pipeline stages may be stacked in front of data interface 20. This would speed up acknowledgement of requests in non-blocking operations if previous data is still pending. Furthermore, although separate handshake components, such as transfer, variable storage, sequencer components etc. are shown, it should be appreciated that in an actual implementation the functions of different connected components may be combined in a single component. Also numerous different combinations of components are possible which have the same functional effect, if only because the same function performed by a single handshake component or a combination of components can be performed by different combinations. As another example, selection circuit 45 might be moved from its position between second sequencer 42 and passivator 43 to a position between data interface 20 and second sequencer 42.

Fig. 6 shows an example of an alternative embodiment of a blocking interface 20, 26, wherein also the substitution of default data is performed for those clock edges for which no data is available from data input 200. Compared to the blocking interface 20, 26 of Fig. 2, the main modification of this embodiment is that clock edges are used to generate requests actively (not in response to requests at the external handshake interface of the blocking interface) and that the generated requests are routed in different ways dependent on whether or not a request from the external handshake interface is pending. If a request from the external handshake interface is found pending, the clock edge generated request is used in combination with the external request to control loading of external data. If no request from the external handshake interface is found pending, the clock edge generated request is used stand-alone to control loading of default data. In this way, unnecessary requests to load default data are avoided as much as possible.

Key components for this purpose are an active clock handshake circuit 60, which actively generates requests in response to clock edges, a case component 67 which routes the requests dependent on the presence of a request from the external handshake interface 202 and a mixer component 63, which passes either external data or default data, dependent on the way the clock edge generated requests are routed.

Fig. 6 shows mixing component 63 between transfer component 28 and variable storage component 29. Mixing component either transmits real data from data input 200 (received via main data transfer component 28) or default data from a default data source 62. Furthermore, the interface contains an active clock handshake circuit 60, a status component 64, a join component 65, a default transfer component 66, a case component 67 and a sequencer 68. The handshake input of the circuit is coupled to a passive port of status component 64, which has an active port coupled to a first passive port of join component 65. Join component 65 has an active port coupled to the passive port of main data transfer component 28. Active clock handshake circuit 60 has a first input coupled to edge component 260 and a second input to an output of status component 64. An output of active clock handshake circuit 60 is coupled to a passive port of case component 67. Case component 67 has two active ports, one coupled to default data transfer component 66 and one to a passive port of sequencer 68. A sequentially first active port of sequencer 68 is coupled to join component 65 and a sequentially second active port of sequencer 68 is coupled to clock interface circuit 26.

In operation, active clock handshake circuit 60 serves to generate handshake requests in response to clock edges of the clock of the synchronous circuits, accompanied by a control value that indicates whether it has detected a request at the asynchronous handshake input of the blocking interface. Dependent on the control value case component 67 passes the request to default transfer component 66 if no request has been found to be pending at the asynchronous handshake input or to sequencer 68 if a request was found to be pending. If the request is passed to default transfer component 66, this component then passes the request, to causes variable storage component 29 to store default data from default data register 62 via mixer 63. The request is acknowledged to active clock handshake circuit 60 once this has been done.

If the request is passed to sequencer 68, sequencer first issues a request to join component 65, which also receives the request from the asynchronous handshake input 202 of the blocking circuit. When both requests have arrived join component 65 generates a request to main data transfer component 28, which passes the request to causes variable storage component 29 to store main data from data input 200 via mixer 63. Join component then acknowledges to the asynchronous handshake input 202 and to sequencer 68. Sequencer 68 then issues a request at its sequentially second active port, to clock interface, in order to receive a confirmation. Once that has been received, sequencer 68 acknowledges towards active clock handshake circuit 60, so that a next clock edge can be handled.

Fig. 7 shows an embodiment of active clock handshake circuit 60, with a sampling component, a repeater a sequencer and a transfer component. The repeater serves to generate requests, which the sequencer first applies to the edge component of the clock interface and, when that edge component has acknowledged, to the transfer component. In this way the edge component is effectively converted to an active component, which generates requests in response to clock edges instead of waiting for requests from the handshake input of the blocking interface.

The transfer component and sampling component cooperate with status component 64 to pick up the control value, dependent on whether a request is pending at the handshake input of the blocking interface. A status component is a component that passes handshakes from its passive port (connected to the handshake input of the blocking interface) to its active port and outputs information whether a request is pending or not. In a simple embodiment, a status component is merely connecting wiring between the active and passive port, with a tap for the information. The sampling component samples the values of the tapped information when it receives a request and returns the sampled value. In principle this may be implemented with a latch, which is clocked by the request, but in practice a known circuit with measures against metastability problems is preferably used. The transfer component receives requests from the sequencer (generated after clock edges); sends a request to the sampling component to capture the information and when that request is acknowledged, the transfer component outputs a request to case component 67, together with the sampled control value.

It should be appreciated that the blocking handshake interface 20, 26 of Fig. 6 can be substituted in the circuits of Fig.s 3 and 4, so that a non-blocking, or a controllably blocking or non blocking interface is obtained, which supplies default data in response to clock edges if no real data is available for use in a clock cycle. In a sense the synchronous side of the interface thus also becomes non-blocking in that operations on this side can proceed without requests from the asynchronous sides.

Although specific implementations of the invention have been described, it should be appreciated that the invention is not limited to these implementations. What counts is the production of appropriate handshake signals for loading data and for acknowledging requests at the external terminals of the interface to permit acknowledgement either after blocking or non-blocking and/or to substitute default data with handshakes in response to clock edges, these handshakes occurring only if no external requests are outstanding. Other circuits may be used, with the same function. In fact, even the diagrams that have been shown represent different circuits, since different implementations of the asynchronous components that are shown are possible. A circuit in such an implementation may even implement the function of a combination of the asynchronous components.

## Claims

1. A data processing circuit comprising:
- an asynchronously operating sub-circuit (10) with a handshake port (11d) and an output port (11c), the handshake port (11d) being arranged to send a request signals and to receive an acknowledge signal, the output port (11c) being arranged to supply data and a blocking/non-blocking control signal accompanying the request signal;
- a clocked operating sub-circuit (16, 17) with a data input;
- a storage element (302) with an input coupled to the output port (11c) of the asynchronously operating sub-circuit (10) and an output coupled to the data input of the clocked operating sub-circuit (16, 17);
- an acknowledge circuit (fig. 4) arranged to generate the acknowledge signal in response to the request signal, the acknowledge circuit (fig 4) comprising a first path (30, 41) through handshake elements of the acknowledge circuit, for generating the acknowledge signal upon storing data that accompanies the request at the output into the storage element, and a second path (30, 41, 43) through handshake elements of the acknowledge circuit for generating the acknowledge signal upon detecting a clock cycle of the clocked operating sub-circuit (16, 17) wherein the clocked operating sub-circuit accepts the data that accompanies the request;
- a path selection circuit (44), arranged to control whether the handshake port receives (11d) the acknowledge signal using the first path (30, 41) or the second path (30, 41, 43), dependent on a value of the blocking/non-blocking control signal that accompanies the request signal.

2. A data processing circuit according to Claim 1, wherein the second path (30, 41, 43) comprises the first path (30, 41), plus an additional path (43) which is arranged to pass the acknowledge signal from the first path upon detecting said clock cycle.

3. A data processing circuit according to Claim 2, comprising:
- a control circuit (40) coupled to the additional path (30, 41, 43), wherein the path selection circuit (44) is arranged to route the acknowledge signal through the second circuit path when the value of the blocking/non blocking signal has a first logic level, and wherein
- the storage element (302) is arranged to store the data as well as the value of the blocking/non blocking signal supplied with the data, the storage element (302) supplying the stored value to the control circuit (40), the control circuit (40) being arranged to disable passing of the acknowledge signal until the stored value assumes the first level.

4. A data processing circuit according to Claim 2, comprising:
- a handshake sequencer (41) with a passive port, a sequentially first active port and a sequentially second active port, the passive port being coupled to the handshake port (11d) of the asynchronously operating sub-circuit (10), the first acknowledge circuit path being coupled to the sequentially first handshake port;
- a conditional routing circuit (40) with a passive port and a routing port, with the passive port coupled to the sequentially second handshake port of the handshake sequencer (41), the conditional routing circuit (40) being arranged to acknowledge requests from the sequentially second active port unconditionally when the value of the blocking/non-blocking control signal has a first logic level and to couple the sequentially second active port to the routing port when the value of the blocking/non-blocking control signal has a first logic level;
- a blocking acknowledge circuit (43) with a port coupled to the routing port and arranged to acknowledge a request from the routing port upon detecting said clock cycle.

5. A data processing circuit according to Claim 1, comprising:
- a further storage element (29) coupled between the storage element (302) and the data input of the clocked operating sub-circuit (16, 17);
- a default substitution circuit (62, 63, 66) coupled between the storage element (302) and the further storage element (29), with a control input for causing default data or data from the storage element to be stored in the further storage element, dependent on a signal at the control input;
- a request detection circuit (60, 64, 65, 67, 68) for detecting whether a request from the handshake port (11c) of the asynchronously operating sub-circuit (10) is pending during a clock edge of the clocked operating sub-circuit (16, 17), the request detection circuit (60, 64, 65, 67, 68) being coupled to the control input of the default substitution (62, 63, 66)) circuit to cause substitution of the default data when no request is pending.

6. A data processing circuit according to Claim 1, wherein the clocked operating sub-circuit (16, 17) comprises a bus sub-system with a bus (19) with address lines (18) and data lines, and a plurality of bus units (17) coupled to the address lines (18) and data lines, all bus units (17) being operable under control of a common clock (16) that defines the clock cycles, the data produced at the data output of the asynchronously operating sub-circuit (10) defining address information and data information, the storage element (302) being coupled to the data and address lines (18) for outputting the address information and data information to the bus (19) respectively.

7. A method of communicating data between an asynchronously operating circuit (10) and a clocked operating sub-circuit (16, 17), the method comprising:
- supplying a data signal from the asynchronously operating sub-circuit (10) accompanied by a blocking/non blocking control signal;
- issuing a request signal from the asynchronously operating sub-circuit (10) when the data signal and the control signal are being supplied;
- storing the data in response to the request at least if the control signal supplied with the data has a first value;
- routing the request signal through a path through handshake elements in a handshake circuit (20, 30,40) that is arranged to generate an acknowledge signal in response to the request signal to the asynchronously operating sub-circuit (10);
- modifying the path through the handshake elements dependent on the control signal, so that the acknowledge signal is generated upon storing the data signal that accompanies the request at the output into the storage element when the control signal supplied with the data has the first value, and the acknowledge signal is generated upon detecting a clock cycle of the clocked operating sub-circuit wherein the clocked operating sub-circuit accepts the data that accompanies the request when the control signal has a second value.

8. A method according to Claim 7 comprising:
- using a first path (30, 41) when the control signal assumes the first value;
- using a second path (30, 41, 43) which comprises the first path (30, 41) and an additional path part (43) when the control signal assumes the second value,
- generating an intermediate acknowledge signal to the additional path part (43) upon storing data;
- passing the intermediate acknowledge signal to the additional path part (43) when the control signal assumes the second value;
- forwarding the acknowledge signal to the asynchronously operating sub-circuit (10) through the additional path part (44) conditional upon detection of said clock cycle.

9. A data processing circuit comprising:
- an asynchronously operating sub-circuit (10) with a handshake port (11d) and an output port (11c) for supplying data;
- a clocked operating sub-circuit (16, 17) with a data input and a clock output;
- a storage element (29);
- a default substitution circuit coupled between the storage element (302) and the output port, the default substitution circuit having a first and second handshake port, the default substitution circuit being arranged to supply default data or data from the output port to the storage element (29), in response to handshake requests, dependent on whether the handshake requests are supplied at the first or the second handshake port;
- a request generating circuit (60, 62, 63, 64, 65, 66, 67, 68) coupled to the handshake port (11c), the first and second passive port of the default substitution circuit and the clock output, and arranged to generate a main request at the first passive port in response to the request at the handshake port upon detecting a subsequent clock edge from the clock output, and to generate one or more default requests at the second passive port in response to respective clock edges only when no request from the handshake port of the asynchronously operating sub-circuit is pending at the time of the respective clock edges.

10. A method of communicating data between an asynchronously operating sub-circuit (10) and a clocked operating sub-circuit (16, 17), the method comprising:
- detecting whether a request from a handshake port (11d) of the asynchronously operating sub-circuit (10) is pending during a clock edge of the clocked operating sub-circuit (16, 17);
- generating a main request at a first intermediate handshake port in response to the request at the handshake port upon receiving the clock edge;
- generating a default request at a second intermediate handshake port in response to the clock edge only when no request from the handshake port (11d) of the asynchronously operating sub-circuit (10) is pending;
- copying default data or data from an output port of the asynchronously operating sub-circuit into a storage element, in response to the main request and the default request respectively;
- supplying stored data from the storage element to the clocked operating sub-circuit.

## Patentansprüche

1. Datenverarbeitungsschaltung mit:
- einer asynchron arbeitenden Teilschaltung (10) mit einem Handshake-Port (11d) und einem Ausgabeport (11c), wobei der Handshake-Port (11d) angeordnet ist, um ein Anforderungssignal zu übermitteln und ein Bestätigungssignal zu empfangen, wobei der Ausgabeport (11c) angeordnet ist, um Daten und ein Blockierungs-/blockierungsfreies Steuersignal, welche das Anforderungssignal begleiten, abzugeben;
- einer taktgesteuert arbeitenden Teilschaltung (16, 17) mit einem Dateneingang;
- einem Speicherelement (302) mit einem an den Ausgabeport (11c) der asynchron arbeitenden Teilschaltung (10) gekoppelten Eingang und einem an den Dateneingang der taktgesteuert arbeitenden Teilschaltung (16, 17) gekoppelten Ausgang;
- einer Bestätigungsschaltung (Fig. 4), welche angeordnet ist, um in Reaktion auf das Anforderungssignal das Bestätigungssignal zu erzeugen, wobei die Bestätigungsschaltung (Fig. 4) einen ersten Weg (30, 41) durch Handshake-Elemente der Bestätigungsschaltung, um das Bestätigungssignal bei Speicherung der die Anforderung begleitenden Daten an dem Ausgang in das Speicherelement zu erzeugen, sowie einen zweiten Weg (30, 41, 43) durch Handshake-Elemente der Bestätigungsschaltung umfasst, um bei Detektieren eines Taktzyklus der taktgesteuert arbeitenden Teilschaltung (16, 17) das Bestätigungssignal zu erzeugen, wobei die taktgesteuert arbeitende Teilschaltung die die Anforderung begleitenden Daten annimmt;
- einer Wegauswahlschaltung (44), die angeordnet ist, um zu kontrollieren, ob der Handshake-Port (11d) das Bestätigungssignal unter Nutzung des ersten Weges (30, 41) oder des zweiten Weges (30, 41, 43), was von einem Wert des das Anforderungssignal begleitenden Blockierungs-/blockierungsfreien Steuersignals abhängig ist, empfängt.

2. Datenverarbeitungsschaltung nach Anspruch 1, wobei der zweite Weg (30, 41, 43) den ersten Weg (30, 41) plus einem zusätzlichen Weg (43) umfasst, der angeordnet ist, um bei Detektieren des Taktzyklus das Bestätigungssignal von dem ersten Weg hindurchzulassen.

3. Datenverarbeitungsschaltung nach Anspruch 2, mit:
- einer Steuerschaltung (40), die an den zusätzlichen Weg (30, 41, 43) gekoppelt ist, wobei die Wegauswahlschaltung (44) angeordnet ist, um das Bestätigungssignal durch den zweiten Weg zu leiten, wenn der Wert des Blockierungs-/blockierungsfreien Signals einen ersten Logikpegel aufweist, und wobei
- das Speicherelement (302) angeordnet ist, um die Daten sowie den mit den Daten zugeführten Wert des Blockierungs-/blockierungsfreien Signals zu speichern, wobei das Speicherelement (302) der Steuerschaltung (40) den gespeicherten Wert zuführt, wobei die Steuerschaltung (40) angeordnet ist, um das Passieren des Bestätigungssignals zu sperren, bis der gespeicherte Wert den ersten Pegel annimmt.

4. Datenverarbeitungsschaltung nach Anspruch 2, mit:
- einer Handshake-Ablaufsteuerung (41) mit einem passiven Port, einem sequentiell ersten aktiven Port und einem sequentiell zweiten aktiven Port, wobei der passive Port an den Handshake-Port (11d) der asynchron arbeitenden Teilschaltung (10) und der erste Weg der Bestätigungsschaltung an den sequentiell ersten Handshake-Port gekoppelt ist;
- einer bedingten Routing-Schaltung (40) mit einem passiven Port und einem Routing-Port, wobei der passive Port an den sequentiell zweiten Handshake-Port der Handshake-Ablaufsteuerung (40) angekoppelt ist, wobei die bedingte Routing-Schaltung (40) angeordnet ist, um Anforderungen von dem sequentiell zweiten aktiven Port uneingeschränkt zu bestätigen, wenn der Wert des Blockierungs-/blockierungsfreien Steuersignals einen ersten Logikpegel aufweist, und um den sequentiell zweiten aktiven Port an den Routing-Port anzukoppeln, wenn der Wert des Blockierungs-/blockierungsfreien Steuersignals einen ersten Logikpegel aufweist;
- einer Blockierungs-Bestätigungsschaltung (43), die einen an den Routing-Port angekoppelten Port aufweist und angeordnet ist, um bei Detektieren des Taktzyklus eine Anforderung von dem Routing-Port zu bestätigen.

5. Datenverarbeitungsschaltung nach Anspruch 1, mit:
- einem weiteren Speicherelement (29), welches zwischen dem Speicherelement (302) und dem Dateneingang der taktgesteuert arbeitenden Teilschaltung (16, 17) geschaltet ist;
- einer Default-Substitutionsschaltung (62, 63, 66), die zwischen dem Speicherelement (302) und dem weiteren Speicherelement (29) geschaltet ist, mit einem Steuereingang, um zu bewirken, dass Defaultdaten oder Daten von dem Speicherelement in Abhängigkeit eines Signals an dem Steuereingang in dem weiteren Speicherelement gespeichert werden;
- einer Anforderungsdetektionsschaltung (60, 64, 65, 67, 68), um zu detektieren, ob eine Anforderung von dem Handshake-Port (11c) der asynchron arbeitenden Teilschaltung (10) während einer Taktflanke der taktgesteuert arbeitenden Teilschaltung (16, 17) ausstehend ist, wobei die Anforderungsdetektionsschaltung (60, 64, 65, 67, 68) an den Steuereingang der Default-Substitutionsschaltung (62, 63, 66) gekoppelt ist, um eine Substitution der Defaultdaten zu bewirken, wenn keine Anforderung ausstehend ist.

6. Datenverarbeitungsschaltung nach Anspruch 1, wobei die taktgesteuert arbeitende Teilschaltung (16, 17) ein Bus-Teilsystem mit einem Bus (19) mit Adressenleitungen (18) und Datenleitungen sowie einer Mehrzahl von Buseinheiten (17) umfasst, die an die Adressenleitungen (18) und Datenleitungen gekoppelt sind, wobei alle Buseinheiten (17) unter Steuerung eines gemeinsamen Taktes (16), der die Taktzyklen definiert, betriebsbereit sind, wobei die an dem Datenausgang der asynchron arbeitenden Teilschaltung (10) erzeugten Daten Adresseninformationen und Dateninformationen definieren, wobei das Speicherelement (302) an die Daten- und Adressenleitungen (18) gekoppelt sind, um die Adresseninformationen und Dateninformationen jeweils an den Bus (19) auszugeben.

7. Verfahren zum Übertragen von Daten zwischen einer asynchron arbeitenden Schaltung (10) und einer taktgesteuert arbeitenden Teilschaltung (16, 17), wobei das Verfahren die folgenden Schritte umfasst:
- Abgeben eines, von einem Blockierungs-/blockierungsfreien Steuersignal begleiteten Datensignals von der asynchron arbeitenden Teilschaltung (10);
- Ausgeben eines Anforderungssignals von der asynchron arbeitenden Teilschaltung (10) bei Abgeben des Datensignals und des Steuersignals;
- Speichern der Daten in Reaktion auf die Anforderung, zumindest wenn das mit den Daten zugeführte Steuersignal einen ersten Wert aufweist;
- Zuführen des Anforderungssignals durch einen Weg durch Handshake-Elemente in einer Handshake-Schaltung (20, 30, 40), die angeordnet ist, um in Reaktion auf das Anforderungssignal ein Bestätigungssignal an die asynchron arbeitende Teilschaltung (10) abzugeben;
- Modifizieren des Weges durch die Handshake-Elemente in Abhängigkeit des Steuersignals, so dass das Bestätigungssignal bei Speicherung des die Anforderung begleitenden Datensignals an dem Ausgang in das Speicherelement erzeugt wird, wenn das mit den Daten zugeführte Steuersignal den ersten Wert aufweist, und das Bestätigungssignal bei Detektieren eines Taktzyklus der taktgesteuert arbeitenden Teilschaltung erzeugt wird, wobei die taktgesteuert arbeitende Teilschaltung die die Anforderung begleitenden Daten annimmt, wenn das Steuersignal einen zweiten Wert aufweist.

8. Verfahren nach Anspruch 7, welches die folgenden Schritte aufweist:
- Verwenden eines ersten Weges (30, 41), wenn das Steuersignal den ersten Wert annimmt;
- Verwenden eines zweiten Weges (30, 41, 43), welcher den ersten Weg (30, 41) umfasst, sowie eines zusätzlichen Wegteils (43), wenn das Steuersignal den zweiten Wert annimmt;
- Abgeben eines Zwischen-Bestätigungssignals an den zusätzlichen Wegteil (43) bei Datenspeicherung;
- Übertragen des Zwischen-Bestätigungssignals zu dem zusätzlichen Wegteil (43), wenn das Steuersignal den zweiten Wert annimmt;
- Zuleiten des Bestätigungssignals zu der asynchron arbeitenden Teilschaltung (10) durch den zusätzlichen Wegteil (44) in Abhängigkeit der Detektion des Taktzyklus.

9. Datenverarbeitungsschaltung mit:
- einer asynchron arbeitenden Teilschaltung (10) mit einem Handshake-Port (11d) und einem Ausgabeport (11c) zur Abgabe von Daten;
- einer taktgesteuert arbeitenden Teilschaltung (16, 17) mit einem Dateneingang und einem Taktausgang;
- einem Speicherelement (29);
- einer Default-Substitutionsschaltung, die zwischen dem Speicherelement (302) und dem Ausgabeport geschaltet ist, wobei die Default-Substitutionsschaltung einen ersten und einen zweiten Handshake-Port aufweist, wobei die Default-Substitutionsschaltung angeordnet ist, um in Reaktion auf Handshake-Anforderungen, je nachdem, ob die Handshake-Anforderungen an dem ersten oder dem zweiten Handshake-Port zugeführt werden, Defaultdaten oder Daten von dem Ausgabeport von dem Ausgabeport zu dem Speicherelement (20) zu übertragen;
- einer Anforderungserzeugungsschaltung (60, 62, 63, 64" 65, 66, 67, 68), die an den Handshake-Port (11c), den ersten und zweiten passiven Port der Default-Substitutionsschaltung und den Taktausgang gekoppelt und angeordnet ist, um bei Detektieren einer nachfolgenden Taktflanke von dem Taktausgang eine Hauptanforderung an dem ersten passiven Port in Reaktion auf die Anforderung an dem Handshake-Port zu erzeugen sowie eine oder mehrere Default-Anforderungen in Reaktion auf jeweilige Taktflanken an dem zweiten passiven Port nur dann zu erzeugen, wenn keine Anforderung von dem Handshake-Port der asynchron arbeitenden Teilschaltung zum Zeitpunkt der jeweiligen Taktflanken ausstehend ist.

10. Verfahren zum Übertragen von Daten zwischen einer asynchron arbeitenden Teilschaltung (10) und einer taktgesteuert arbeitenden Teilschaltung (16, 17), wobei das Verfahren die folgenden Schritte umfasst:
- Ermitteln, ob eine Anforderung von einem Handshake-Port (11d) der asynchron arbeitenden Teilschaltung (10) während einer Taktflanke der taktgesteuert arbeitenden Teilschaltung (16, 17) ausstehend ist;
- Erzeugen einer Hauptanforderung an einem ersten Zwischen-Handshake-Port in Reaktion auf die Anforderung an dem Handshake-Port bei Empfangen der Taktflanke ;
- Erzeugen einer Default-Anforderung an einem zweiten Zwischen-Handshake-Port in Reaktion auf die Taktflanke, nur wenn keine Anforderung von dem Handshake-Port (11d) der asynchron arbeitenden Teilschaltung (10) ausstehend ist;
- Kopieren der Defaultdaten oder Daten von einem Ausgabeport der asynchron arbeitenden Teilschaltung in ein Speicherelement in Reaktion auf die Hauptanforderung bzw. die Default-Anforderung;
- Zuführen der gespeicherten Daten von dem Speicherelement zu der taktgesteuert arbeitenden Teilschaltung.

## Revendications

1. Circuit de traitement de données comprenant :
- un sous-circuit à fonctionnement asynchrone (10) avec un port d'établissement de liaison (1 Id) et un port de sortie (11c), le port d'établissement de liaison (11d) étant agencé pour envoyer un signal de demande et pour recevoir un signal d'accusé de réception, le port de sortie (11c) étant agencé pour fournir des données et un signal de commande de blocage/non-blocage accompagnant le signal de demande ;
- un sous-circuit à fonctionnement synchronisé (16, 17) avec une entrée de données ;
- un élément de stockage (302) avec une entrée couplée au port de sortie (11c) du sous-circuit à fonctionnement asynchrone (10) et une sortie couplée à l'entrée de données du sous-circuit à fonctionnement synchronisé (16, 17) ;
- un circuit d'accusé de réception (figure 4) agencé pour produire le signal d'accusé de réception en réponse au signal de demande, le circuit d'accusé de réception (figure 4) comprenant un premier trajet (30, 41) à travers des éléments d'établissement de liaison du circuit d'accusé de réception, pour produire le signal d'accusé de réception lors du stockage de données qui accompagnent la demande à la sortie dans l'élément de stockage, et un second trajet (30, 41, 43) à travers des éléments d'établissement de liaison du circuit d'accusé de réception pour produire le signal d'accusé de réception lors de la détection d'un cycle d'horloge du sous-circuit à fonctionnement synchronisé (16, 17) dans lequel le sous-circuit à fonctionnement synchronisé accepte les données qui accompagnent la demande ;
- un circuit de sélection de trajet (44), agencé pour contrôler si le port d'établissement de liaison (1 Id) reçoit le signal d'accusé de réception en utilisant le premier trajet (30, 41) ou le second trajet (30, 41, 43), suivant une valeur du signal de commande de blocage/non-blocage qui accompagne le signal de demande.

2. Circuit de traitement de données selon la revendication 1, dans lequel le second trajet (30, 41, 43) comprend le premier trajet (30, 41), plus un trajet supplémentaire (43) qui est agencé pour faire passer le signal d'accusé de réception à partir du premier trajet lors de la détection dudit cycle d'horloge.

3. Circuit de traitement de données selon la revendication 2, comprenant :
- un circuit de commande (40) couplé au trajet supplémentaire (30, 41, 43), dans lequel le circuit de sélection de trajet (44) est agencé pour router le signal d'accusé de réception à travers le second trajet de circuit lorsque la valeur du signal de blocage/non-blocage possède un premier niveau de logique, et dans lequel
- l'élément de stockage (302) est agencé pour stocker les données ainsi que la valeur du signal de blocage/non-blocage fourni avec les données, l'élément de stockage (302) fournissant la valeur stockée au circuit de commande (40), le circuit de commande (40) étant agencé pour désactiver le passage du signal d'accusé de réception jusqu'à ce que la valeur stockée prenne le premier niveau.

4. Circuit de traitement de données selon la revendication 2, comprenant :
- un séquenceur d'établissement de liaison (41) avec un port passif, un premier port actif séquentiellement et un second port actif séquentiellement, le port passif étant couplé au port d'établissement de liaison (1 Id) du sous-circuit à fonctionnement asynchrone (10), le premier trajet de circuit d'accusé de réception étant couplé au premier port d'accusé de réception séquentiellement ;
- un circuit de routage conditionnel (40) avec un port passif et un port de routage, le port passif étant couplé au second port d'accusé de réception séquentiellement du séquenceur d'établissement de liaison (41), le circuit de routage conditionnel (40) étant agencé pour accuser réception de demandes à partir du second port actif séquentiellement inconditionnellement lorsque la valeur du signal de commande de blocage/non-blocage possède un premier niveau de logique et pour coupler le second port actif séquentiellement au port de routage lorsque la valeur du signal de commande de blocage/non-blocage possède un premier niveau de logique ;
- un circuit d'accusé de réception de blocage (43) avec un port couplé au port de routage et agencé pour accuser réception d'une demande à partir du port de routage lors de la détection dudit cycle d'horloge.

5. Circuit de traitement de données selon la revendication 1, comprenant :
- un élément de stockage supplémentaire (29) couplé entre l'élément de stockage (302) et l'entrée de données du sous-circuit à fonctionnement synchronisé (16, 17) ;
- un circuit de substitution par défaut (62, 63, 66) couplé entre l'élément de stockage (302) et l'élément de stockage supplémentaire (29), avec une entrée de commande pour faire en sorte que des données par défaut ou données à partir de l'élément de stockage soient stockées dans l'élément de stockage supplémentaire, suivant un signal à l'entrée de commande ;
- un circuit de détection de demande (60, 64, 65, 67, 68) pour détecter si une demande à partir du port d'établissement de liaison (11c) du sous-circuit à fonctionnement asynchrone (10) est en attente au cours d'un front d'horloge du sous-circuit à fonctionnement synchronisé (16, 17), le circuit de détection de demande (60, 64, 65, 67, 68) étant couplé à l'entrée de commande du circuit de substitution par défaut (62, 63, 66) pour entraîner la substitution des données par défaut lorsqu'aucune demande n'est en attente.

6. Circuit de traitement de données selon la revendication 1, dans lequel le sous-circuit à fonctionnement synchronisé (16, 17) comprend un sous-système de bus avec un bus (19) avec des lignes d'adresse (18) et des lignes de données, et une pluralité d'unités de bus (17) couplées aux lignes d'adresse (18) et aux lignes de données, toutes les unités de bus (17) étant opérationnelles sous la commande d'une horloge commune (16) qui définit les cycles d'horloges, les données produites à la sortie de données du sous-circuit à fonctionnement asynchrone (10) définissant des informations d'adresse et des informations de données, l'élément de stockage (302) étant couplé aux lignes de données et d'adresse (18) pour envoyer les informations d'adresse et les informations de données au bus (19), respectivement.

7. Procédé de communication de données entre un circuit à fonctionnement asynchrone (10) et un sous-circuit à fonctionnement synchronisé (16, 17), le procédé comprenant les étapes consistant à :
- fournir un signal de données à partir du sous-circuit à fonctionnement asynchrone (10) accompagné par un signal de commande de blocage/non-blocage ;
- envoyer un signal de demande à partir du sous-circuit à fonctionnement asynchrone (10) lorsque le signal de données et le signal de commande sont fournis ;
- stocker les données en réponse à la demande au moins si le signal de commande fourni avec les données possède une première valeur ;
- router le signal de demande à travers un trajet à travers des éléments d'établissement de liaison dans un circuit d'établissement de liaison (20, 30, 40) qui est agencé pour produire un signal d'accusé de réception en réponse au signal de demande jusqu'au sous-circuit à fonctionnement asynchrone (10) ;
- modifier le trajet à travers les éléments d'établissement de liaison suivant le signal de commande, de sorte que le signal d'accusé de réception soit produit lors du stockage du signal de données qui accompagne la demande à la sortie dans l'élément de stockage lorsque le signal de commande fourni avec les données possède la première valeur, et le signal d'accusé de réception soit produit lors de la détection d'un cycle d'horloge du sous-circuit à fonctionnement synchronisé dans lequel le sous-circuit à fonctionnement synchronisé accepte les données qui accompagnent la demande lorsque le signal de commande possède une seconde valeur.

8. Procédé selon la revendication 7, comprenant les étapes consistant à :
- utiliser un premier trajet (30, 41) lorsque le signal de commande prend la première valeur ;
- utiliser un second trajet (30, 41, 43) qui comprend le premier trajet (30, 41) et une partie de trajet supplémentaire (43) lorsque le signal de commande prend la seconde valeur,
- produire un signal d'accusé de réception sur la partie de trajet supplémentaire (43) lors du stockage de données ;
- faire passer le signal d'accusé de réception jusqu'à la partie de trajet supplémentaire (43) lorsque le signal de commande prend la seconde valeur ;
- envoyer le signal d'accusé de réception jusqu'au sous-circuit à fonctionnement asynchrone (10) à travers la partie de trajet supplémentaire (44) de façon conditionnelle lors de la détection dudit cycle d'horloge.

9. Circuit de traitement de données comprenant :
- un sous-circuit à fonctionnement asynchrone (10) avec un port d'établissement de liaison (11d) et un port de sortie (11c) pour fournir des données ;
- un sous-circuit à fonctionnement synchronisé (16, 17) avec une entrée de données et une sortie d'horloge ;
- un élément de stockage (29) ;
- un circuit de substitution par défaut couplé entre l'élément de stockage (302) et le port de sortie, le circuit de substitution par défaut possédant des premier et second ports d'établissement de liaison, le circuit de substitution par défaut étant agencé pour fournir des données par défaut ou données du port de sortie à l'élément de stockage (29), en réponse à des demandes d'établissement de liaison, suivant que les demandes d'établissement de liaison sont fournies au premier ou au second port d'établissement de liaison ;
- un circuit de production de demande (60, 62, 63, 64, 65, 66, 67, 68) couplé au port d'établissement de liaison (11c), aux premier et second ports passifs du circuit de substitution par défaut et à la sortie d'horloge, et agencé pour produire une demande principale au premier port passif en réponse à la demande au port d'établissement de liaison lors de la détection d'un front d'horloge suivant à partir de la sortie d'horloge, et pour produire une ou plusieurs demandes par défaut au second port passif en réponse à des fronts d'horloge respectifs seulement lorsqu'aucune demande à partir du port d'établissement de liaison du sous-circuit à fonctionnement asynchrone n'est en attente au moment des fronts d'horloge respectifs.

10. Procédé de communication de données entre un sous-circuit à fonctionnement asynchrone (10) et un sous-circuit à fonctionnement synchronisé (16, 17), le procédé comprenant les étapes consistant à :
- détecter si une demande à partir d'un port d'établissement de liaison (11d) du sous-circuit à fonctionnement asynchrone (10) est en attente au cours d'un front d'horloge du sous-circuit à fonctionnement synchronisé (16, 17) ;
- produire une demande principale à un premier port d'établissement de liaison intermédiaire en réponse à la demande au port d'établissement de liaison lors de la réception du front d'horloge ;
- produire une demande par défaut à un second port d'établissement de liaison intermédiaire en réponse au front d'horloge seulement lorsqu'aucune demande à partir du port d'établissement de liaison (11d) du sous-circuit à fonctionnement asynchrone (10) n'est en attente ;
- copier des données par défaut ou données à partir d'un port de sortie du sous-circuit à fonctionnement asynchrone dans un élément de stockage, en réponse à la demande principale et à la demande par défaut, respectivement ;
- fournir les données stockées à partir de l'élément de stockage au sous-circuit à fonctionnement synchronisé.
